(19)

Europäisches
Patentamt
European
Patent Office
Office européen
des brevets

(11) **EP 2 481 767 A2**

(12) **EUROPEAN PATENT APPLICATION**

(43) Date of publication:
**01.08.2012 Bulletin 2012/31**

(51) Int Cl.:
*C08J 5/18* *(2006.01)*  *C08L 23/10* *(2006.01)*

(21) Application number: **12002941.8**

(22) Date of filing: **17.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(62) Document number(s) of the earlier application(s) in accordance with Art. 76 EPC:
**06713961.8 / 1 985 649**

(71) Applicant: **Toray Industries, Inc.**
**Tokyo, 103-8666 (JP)**

(72) Inventors:
• **Itou, Tatsuya**
 **Mishima-shi**
 **Shizuoka 4110033 (JP)**
• **Moriguchi, Isamu**
 **Omihachiman-shi**
 **Shiga 5230043 (JP)**

• **Iwashita, Masahito**
 **Tsuchiura**
 **Ibaraki 3000016 (JP)**
• **Uematsu, Kimitake**
 **Tsuchiura-shi**
 **Ibaraki 3000061 (JP)**
• **Nitta, Koh-hei**
 **Kanazawa-shi**
 **Ishikawa 9218154 (JP)**
• **Kawamura, Takanobu**
 **Kanazawa-shi**
 **Ishikawa 9200953 (JP)**

(74) Representative: **Kador & Partner**
 **Corneliusstraße 15**
 **DE-80469 München (DE)**

Remarks:
This application was filed on 26-04-2012 as a divisional application to the application mentioned under INID code 62.

(54) **Biaxially oriented polypropylene film**

(57)     This invention is intended to provide a biaxially oriented polypropylene film capable of exhibiting excellent high breakdown voltage and preservability even in a high temperature atmosphere of 80°C or higher. The biaxially oriented polypropylene film of this invention is a polypropylene film formed of a polypropylene resin mainly composed of propylene, at least one of the surfaces of which has a basic surface configuration consisting of crepe-like asperity and having a 10-point mean roughness (Rz) of 0.5 to 1.5 $\mu$m and a surface glossiness of 90 to 135%.

Fig. 1

100um

**EP 2 481 767 A2**

**Description**

[Technical field]

The present invention relates to a biaxially oriented polypropylene film suitable for packaging, industrial applications, etc. In more detail, this invention relates to a biaxially oriented polypropylene film with processability suitable for processing into capacitor dielectrics and excellent breakdown voltage at high temperature.

[Background art]

Biaxially oriented polypropylene films are used in various applications such as packaging application, tape application and electric application to cable wrapping, capacitors, etc., since they are excellent in transparency, mechanical properties, electric properties, etc.

Among these applications, in the application to capacitors, biaxially oriented polypropylene films are especially preferably used for high voltage capacitors irrespective of DC or AC application, since they are excellent in breakdown voltage properties and low dielectric loss tangent properties.

Such a biaxially oriented polypropylene film must be moderately roughened on the surface, to have higher slipperiness and higher oil impregnation, or in the case of metallized capacitors, to provide preservability. In this case, preservability refers to such a function that the deposited metal of metallized capacitors having metal-deposited layer formed on the dielectric film concerned as electrodes can be scattered by discharge energy at the time of abnormal discharge, to recover the insulation properties, for preventing short-circuiting, thereby maintaining the function as a capacitor or preventing the breakdown. It is a very useful function also in view of safety.

Proposed surface roughening methods include mechanical methods such as embossing method and sand blasting method, chemical methods such as chemical etching by a solvent, a method of stretching a sheet formed by mixing a dissimilar polymer such as polyethylene, a method of stretching a sheet having β crystals produced (for example, see Patent Documents 1 and 2), etc.

However, mechanical methods and chemical methods result in low roughness densities, and the method of stretching a sheet having β crystals produced is likely to produce coarse protrusions and is not satisfactory enough in view of protrusion density as the case may be. Further, the film roughened on the surface by any of these methods is insufficient in the oil impregnation into the clearance between the film layers when a capacitor is formed and is liable to form partially non-impregnated portions, lowering the life of the capacitor as the case may be. The method of stretching a sheet obtained by mixing a dissimilar polymer such as polyethylene causes few bubbles to remain when a capacitor is formed, but when the film is recycled, the dissimilar polymer may exert an adverse effect, to raise the problem of poor recyclability.

Further, the biaxially oriented polypropylene film produced by any of these methods is not sufficient in preservability under such severe capacitor use conditions as high temperature of 80°C or higher and potential gradient of 200 v/$\mu$m or more, and raises the problem of reliability as the case may be. In the above, the potential gradient is a quotient obtained by dividing the voltage applied to a dielectric film by the thickness of the film and refers to the voltage applied per unit film thickness.

Furthermore, for the uniformity of roughness density and protrusions, proposed are a high melt tension polypropylene film (for example, see Patent Document 4) and a laminate film consisting of a high melt tension polypropylene film and an ordinary polypropylene film (for example, see Patent Document 3), etc. However, in the case where a high melt tension polypropylene resin per se is used for application to capacitors, sufficient heat resistance cannot be obtained in view of the structure of the resin, to raise a problem that the dielectric breakdown voltage declines remarkably. Moreover, in the technique of laminating a high melt tension polypropylene resin, it is difficult to obtain a thin film with a thickness of 5 $\mu$m or less consisting of uniformly thick layers, and presently a practically satisfied dielectric film cannot be obtained since the uniformity is impaired.

[Patent Document 1] JP51-63500A
[Patent Document 2] JP2001-324607A
[Patent Document 3] JP2001-129944A
[Patent Document 4] JP2001-72778A

[Disclosure of the invention]

[Problems to be solved by the invention]

In view of the abovementioned background of the prior art, this invention is intended to provide a biaxially oriented polypropylene film capable of exhibiting excellent breakdown voltage and reliability even in a high temperature atmosphere of 80°C or higher.

This biaxially oriented polypropylene film can be provided as a biaxially oriented polypropylene film having a surface excellent in the uniformity of protrusions and high in roughness density suitable for packaging, capacitors, etc.

[Means for solving the problems]

This invention employs the following means for solving the abovementioned problems. That is, the biaxially oriented polypropylene film of this invention is a biaxially oriented polypropylene film formed of a polypropylene resin mainly composed of propylene, at least one of the surfaces of which has a basic surface configuration consisting of crepe-like asperity and having a 10-point mean roughness (Rz) of 0.5 to 1.5 $\mu$m and a surface glossiness of 90 to 135%.

Further, it is preferred that the biaxially oriented polypropylene film of this invention has the following features (1) through (5).

(1) Said film surface contains crater-like asperity, and the major axes of said craters are 150 $\mu$m or less.
(2) The ratio (Rz/Ra) of the 10-point mean roughness (Rz) to the center line mean roughness (Ra) of at least one film surface is 8 or more.
(3) Said polypropylene resin is obtained by mixing a branched-chain polypropylene (H), the melt tension (MS) and the melt flow rate (MFR) of which measured at 230°C satisfy the relational expression of log (MS) > -0.56 log (MFR) + 0.74, with a linear polypropylene.
(4) The content of said branched-chain polypropylene (H) is 0.05 to 3 wt%.
(5) Said polypropylene resin contains 0.1 to 0.9 wt% of said branched-chain polypropylene (H).

[Effects of the invention]

This invention can provide a biaxially oriented polypropylene film that is excellent in processability even if it is thin since it has excellent surface properties, and can exhibit high breakdown voltage even in a wide atmospheric temperature range from a low temperature of -40°C to a high temperature of higher than 90°C, and the film is suitable for packaging, capacitors, etc.

[Brief description of the drawings]

[Fig. 1] is a differential interference microscope photograph showing the surface of the biaxially oriented propylene film of this invention as an example.
[Fig. 2] is a three-dimensional roughness chart showing the surface of the biaxially oriented polypropylene film of this invention as an example.
[Fig. 3] is a differential interference microscope photograph showing the surface of a biaxially oriented polypropylene film formed by crystal transformation.
[Fig. 4] is a three-dimensional roughness chart showing the surface of a biaxially oriented polypropylene film formed by crystal transformation.
[Fig.5] is a differential interference microscope photograph showing the surface of a biaxially oriented polypropylene film formed to have crepe-like asperity only.
[Fig. 6] is a three-dimensional roughness chart showing the surface of a biaxially oriented polypropylene film formed to have crepe-like asperity only.
[Fig. 7] is a differential interference microscope photograph showing the surface of the biaxially oriented polypropylene film of this invention as an example.
[Fig. 8] is a three-dimensional roughness chart showing the surface of the biaxially oriented polypropylene film of this invention as an example.

[The best modes for carrying out the invention]

The present inventors made an intensive study to solve the aforementioned problems, namely, to provide a biaxially oriented polypropylene film capable of exhibiting excellent breakdown voltage and reliability even in high atmospheric temperature conditions of 80°C or higher, and as a result, found that when a specific branched-chain polypropylene (H) was mixed with a linear polypropylene, the size of the spherocrystal produced in the step of cooling a melt-extruded resin sheet could be controlled to be small, while the generation of insulation defects produced in the stretching step could be kept small. Further, the branched-chain polypropylene (H), having a function like an α crystal nucleating agent, but also allowed the formation of a rough surface by crystal transformation when its added amount was small, and allowed small-sized craters to be formed densely in concert with the aforementioned effect of reducing the size of spherocrystal. Thus, a biaxially oriented polypropylene film excellent in the uniformity of protrusions and excellent also in the balance the uniformity and the roughness density, hence having characteristic surface roughness, could be successfully provided. That is, a basic surface configuration consisting of characteristic crepe-like asperity having a surface glossiness of 90 to 135% was made to have a ten-point mean roughness (Rz) of 0.5 to 1.5 μm, by mixing such a specific branched-chain polypropylene (H), and this constitution has been found to solve the abovementioned problems all at once.

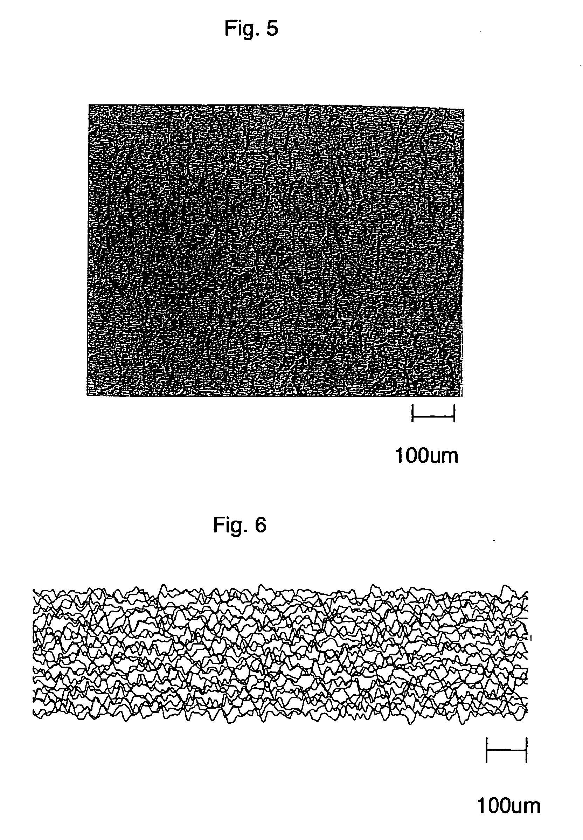

The surface geometry of this invention is explained below in detail. That is, the asperity in the surface configuration proposed by this invention includes the granular to creased structure obtained in said Patent Documents 3 and 4. Fig. 5 is a surface photograph showing a typical granular to creased structure defined as crepe-like asperity in this invention, and Fig. 6 is a three-dimensional roughness chart of the surface. The asperity of such geometry is excellent in uniformity, but because of the uniformity, when a film roll or capacitor element is formed, there is a problem that the adjacent film layers in the roll are likely to slip each other, and therefore the roll form does not remain stable, being liable to be distorted with wrinkle, etc. or there is a problem that the form as an element does not remain stable, resulting in poor electric properties.

To solve these problems, the inventors attempted to moderately form protrusions sufficiently larger than the surface protrusions formed by said crepe-like asperity, on the basic surface configuration of said crepe-like asperity.

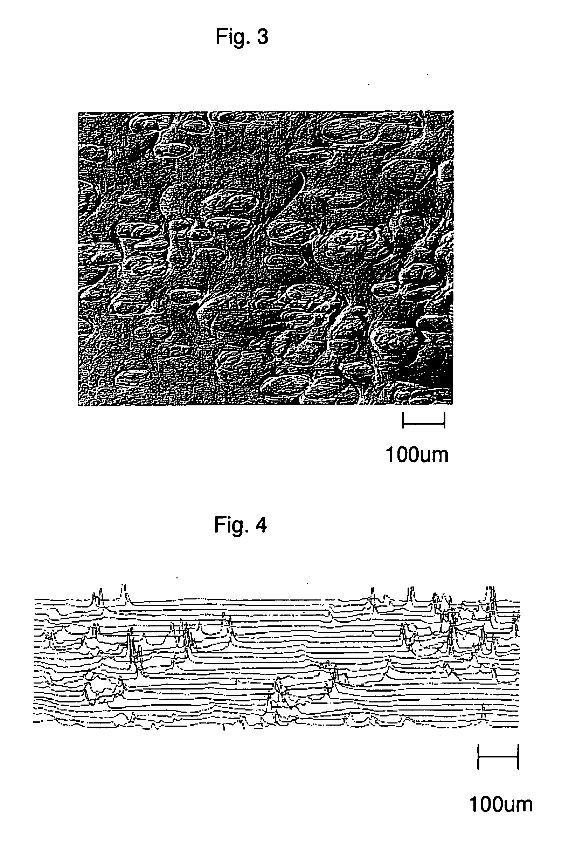

Methods for forming such protrusions on the surface of a film include methods of adding a resin incompatible with polypropylene or adding inorganic and/or organic particles, etc. Intended protrusions can also be obtained by the crystal transformation that does not require the addition of electric impurities and can little deteriorate electric properties such as dielectric breakdown voltage. The surface configuration obtained by crystal transformation is explained below. The surface forming method by crystal transformation is to form a surface using the two crystal systems of polypropylene described in Non-Patent Document (M. Fujiyama, Journal of Applied Polymer Science 36, p. 985-1948 (1988), etc. Spherocrystal of α crystal system (monoclinic system, crystal density 0.936 g/cm$^3$) and the spherocrystal of β crystal system (hexagonal system, crystal density 0.922 g/cm$^3$) are produced in a non-stretched sheet, and in the stretching process, the thermally unstable P crystals are transformed into α crystals, to form asperity on the surface of a film. Since the basic units of the surface asperity obtained by this method are caused by the deformation of spherocrystal, the forms of the asperity are the forms of craters formed like circular arcs. A typical surface geometry obtained by said crystal transformation is shown in Fig. 3, and numerous elliptical crater forms can be confirmed. This surface is expressed as a three-dimensional surface roughness chart in Fig. 4, and it can be confirmed that the portions protruded from the film surface are connected with each other like circular arcs to have crater forms. Further, this technique has a feature that the area where the spherocrystal of P crystal system do not exist does not form asperity but stays flat. Said circular arc protrusions change in response to the ratio between the longitudinal stretching ratio and the transverse stretching ratio employed for biaxial stretching. At a ratio of longitudinal stretching ratio/transverse stretching ratio of 1, namely, in isotropic stretching, the protrusions are almost circular, and with the increase of the ratio of longitudinal stretching ratio/transverse stretching ratio, the circles become flattened. The geometry obtained by a sequential biaxial stretching method usually has maj or axes in the transverse direction of the film (the width direction of the film roll). Further, depending on how spherocrystal are produced, it can happen that multiple craters different in form are superimposed, and it can happen that circular arcs not closed like rings are formed like arcs or semi-arcs.

In this invention, it has been found surprisingly that in the case where the added amount of the branched-chain polypropylene (H) and the film forming conditions are optimized, said craters like circular arcs can be produced on the basic surface configuration consisting of crepe-like asperity.

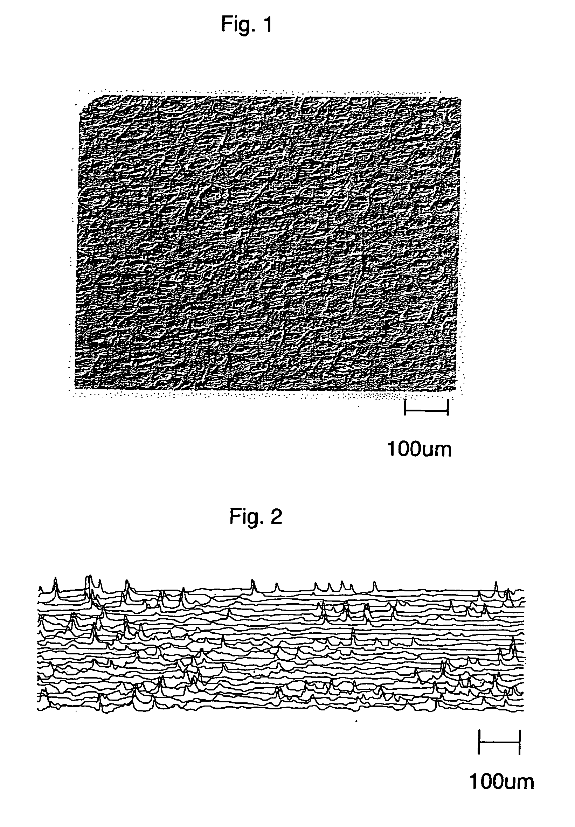

Fig. 1 is a surface photograph obtained in Example 1 of this invention, and Fig. 2 is a three-dimensional roughness chart of the surface photograph. While the crepe-like asperity with undulation as the basic surface configuration can be observed, numerous crater forms like circular arcs can be observed. Since smaller crater forms are formed more densely than in Fig. 3, clear crater forms are not shown in the three-dimensional roughness chart of Fig. 2, but it can be confirmed that sufficiently high protrusions are formed compared with the roughness of the basic surface configuration with the intended undulation.

The surface properties of the film of this invention are explained below in detail.

It is necessary that the ten-point mean roughness (Rz) of said film surface is 0.5 to 1.5 μm, and a preferred range is 0.7 to 1.3 μm. If Rz is too small, it can happen that the film cannot be wound well since air cannot escape sufficiently, to distort the roll form, or that the capacitor element may not be formed well. On the other hand, if Rz is too large, the dielectric breakdown voltage may decline.

Further, the glossiness of said film surface is in a range from 90 to 135%, and a preferred range is 95 to 130%. That is, lowering the glossiness means to raise the light scattering density on the film surface, namely, to densify the asperity of the film surface. If the glossiness is lowered, the liquid impregnation becomes good. However, the adjacent film layers in the roll are likely to slip each other for lowering the element windability, and it becomes difficult to wind the film as a roll since air cannot escape sufficiently when the film is wound. On the other hand, if the glossiness is more than 135%, the adjacent film layers in the roll are unlikely to slip each other, and it is difficult to form a flat capacitor element, or since a sufficient clearance cannot be maintained, a problem such as poor preservability occurs.

Furthermore, as described before, it is preferred that the surface of the film of this invention has crater-like asperity formed in addition to the crepe-like asperity.

With regard to the size of said craters, larger craters tend to produce higher asperity, for affecting the dielectric breakdown properties. So, it is preferred that the crater size is smaller, and it is preferred that the major axis is 150 $\mu$m or less. An especially preferred range is 5 to 120 $\mu$m. The size of craters is measured, as explained later in detail, by forming an aluminum-deposited layer on the film surface and using a differential interference microscope.

Further, it is preferred that the biaxially oriented polypropylene film of this invention has a center line mean surface roughness Ra of 0.02 to 0.10 $\mu$m at least on one of the surfaces of the film. In the case where the center line mean roughness is too large, when the films are layered, air comes in between the layers, to deteriorate the capacitor element, and further when a metal layer is formed on the film, the metal layer is, for example, perforated to lower the dielectric breakdown strength at high temperature or to shorten the life of the element or to bring about load concentration when a voltage is applied, for causing insulation defects. On the contrary, if the center line mean roughness is too small, the film becomes less slippery to lower handling properties, or when the capacitor element is impregnated with an insulating oil, the insulating oil does not uniformly permeate between film layers, to greatly change the capacity while the capacitor element is continuously used. A more preferred range of the center line mean surface roughness at least on one surface of the film is 0.03 to 0.08 $\mu$m, and an especially preferred range is 0.04 to 0.07 $\mu$m.

Since the biaxially oriented polypropylene film of this invention has large protrusions in addition to the crepe-like asperity provided as the basic surface configuration as described before, it is preferred that the ten-point mean roughness (Rz) is sufficiently large compared with said center line mean surface roughness (Ra). That is, it is preferred that the ratio of both (Rz/Ra) is 8 or more at least on one of the surfaces. A more preferred range is 10 to 40, and an especially preferred range is 15 to 35. In the case where the ratio (Rz/Ra) is too large, since the rate of coarse protrusions increases, air comes in between the layers of the film formed by laminating the layers, to deteriorate the capacitor element, and further, when a metal layer is formed on the film, the metal layer,is, for example, perforated to lower the dielectric breakdown strength at high temperature or to shorten the life of the element or to bring about load concentration when a voltage is applied, for causing insulation defects. On the contrary, if the ratio (Rz/Ra) is too small, handling properties may become poor.

Further, in the case where the biaxially oriented polypropylene film excellent in the uniformity of protrusions, excellent in the balance between the uniformity and the roughness density, and having characteristic surface roughness values and a surface glossiness of 90 to 135% is used to make a capacitor, even if dielectric breakdown occurs, the moderate clearance kept between the film layers allows the life of the capacitor to be maintained without causing breakdown, as an excellent function of stably exhibiting the aforementioned preservability.

Furthermore, the biaxially oriented polypropylene film is formed by mixing a specific branched-chain polypropylene (H) with a linear polypropylene as described before, and the melt crystallization temperature of the specific biaxially oriented polypropylene film can be enhanced to 115°C or higher, though the melt crystallization temperature of an ordinary polypropylene is about 110°C at the highest, to define a contribution to the preservability at high temperature. That is, in a self-healing process, the discharge energy generated when a dielectric film encounters dielectric breakdown because of any cause scatters the deposited metal near the discharge portion, and because of partial high temperature, the film is also partially melted, but recrystallized to recover the insulation properties. If the atmospheric temperature of the capacitor becomes high, recrystallization is unlikely to occur making it hard to recover the insulation properties, but in this invention, since the melt crystallization temperature is enhanced, the preservability at high temperature can be enhanced.

Further, said biaxially oriented polypropylene film is more excellent than the linear polypropylene not only in film formability but also in physical properties such as tensile strength, since said biaxially oriented polypropylene film with a thickness of 3 $\mu$m can be used in the applications covered by a linear polypropylene film with a thickness of 4 $\mu$m.

In this invention, a mixture is obtained by mixing the specific branched-chain polypropylene (H) with a usually used linear polypropylene and branched-chain polypropylene (H) acts as an $\alpha$ crystal nucleating agent. As the branched-chain polypropylene (H), it is preferred to use a branched-chain polypropylene, the melt tension (MS) and melt flow rate (MFR) of which measured at 230°C satisfy the relational expression of log (MS) > -0.56 log (MFR) + 0.74.

In the above, the melt tension measured at 230°C is measured using an instrument for measuring the melt flow rate (MFR) specified in JIS K 7210. Particularly, a melt tension tester produced by Toyo Seiki Seisaku-sho, Ltd. is used. A polypropylene is heated up to 230°C, and the molten polypropylene is discharged at an extrusion rate of 15 mm/min, to make a strand. The tension acting when the strand is taken up at a rate of 6.4 m/min is measured as the melt tension (in cN) . Further, the melt flow rate (MFR) measured at 230°C is the value measured at a load of 21.18 N according to JIS K 6758 (in g/10 min).

The branched-chain polypropylene (H) of this invention is not especially limited as far as the above formula is satisfied, but it is preferred in view of film formability that the melt flow rate (MFR) is in a range from 1 to 20 g/10 min. A more preferred range is 1 to 10 g/10 min. Further, it is preferred that the melt tension is in a range from 1 to 30 cN, and a more preferred range is 2 to 20 cN. If the melt tension is small, the uniformity of protrusions is poor, and the ratio of the ten-point mean roughness Rz to the center line mean surface roughness Ra (Rz/Ra) becomes large. Further, the roughness density becomes also small (the number of protrusions per unit area becomes small). If the melt tension is larger, the uniformity of protrusions tends to be higher while the ratio (Rz/Ra) tends to be smaller.

For obtaining a branched-chain polypropylene (H), a method of blending an oligomer or polymer with a branch structure, or a method of introducing a long-chain branched structure into the polypropylene molecule as described in JP62-121704A, or a method as described in Japanese Patent No. 2869606, etc. can be preferably used. Particularly, "Profax PF-814" produced by Basell, "Daploy HMS-PP" (WB130HMS, WB135HMS, etc.) produced by Borealis can be exemplified. Among them, a resin obtained by an electron beam crosslinking method can be preferably used, since the amount of the gel component in said resin is small. The feature of the mixture obtained by adding such an HMS resin to PP is that the melt crystallization temperature rises to a range from 115 to 130°C, though the melt crystallization temperature of PP is usually about 110°C .

In this invention, in the case where such a branched-chain polypropylene (H) is added to an ordinary polypropylene resin, it is preferred that the upper limit of the added amount of said (H) is 3 wt%. It is more preferred that the added amount is 0.02 to less than 1 wt%, and an especially preferred range is 0.05 to 0.7 wt%. It is preferred to employ such a resin composition, since said polypropylene resin can have a uniform surface formed owing to at least two melting peaks observed at the time of measurement in 2$^{nd}$-runs, that is, a shoulder peak of 148 to 157°C in addition to the first melting peak temperature of 160 to 172°C.

Mixing the amounts as described above allows the production of a characteristic biaxially oriented polypropylene film having a characteristic crepe-like asperity geometry excellent in the uniformity of protrusions and excellent in the balance between the uniformity and the roughness density, having a rough surface with a surface glossiness of 90 to 130%, and capable of exhibiting excellent processability and high breakdown voltage even in a wide atmospheric temperature range from -40°C to higher than 90°C.

Next, the linear polypropylene used in the biaxially oriented polypropylene film of this invention is used usually for a packaging material and for capacitors. It is preferred that polypropylene having a cold xylene soluble portion (hereinafter abbreviated as CXS) content of 4% or less and satisfying the relational expression of log (MS) < -0.56 log (MFR) + 0.74, wherein MS is the melt tension and MFR is the melt flow rate, respectively measured at 230°C. If the relational expression is not satisfied, the stability of film formation may become poor as the case may be, and voids may be formed in the biaxially oriented film when the film is produced, as the case may be. Further, dimensional stability and dielectric breakdown resistance may greatly decline as the case may be.

The cold xylene soluble portion (CXS) refers to the polypropylene component dissolved in xylene after the film fully dissolved in xylene has been precipitated at room temperature. The component is considered to correspond to a component unlikely to be crystallized for such reasons as low stereoregularity and low molecular weight. If this component is contained in the resin in a large amount, there are such problems that the film is poor in thermal dimensional stability and that the dielectric breakdown voltage at high temperature declines. Therefore, it is preferred that CXS content is 4% or less, and more preferred is 3% or less. Especially preferred is 2% or less. A polypropylene film with such a CXS content can be obtained by using a publicly known method such as a method of enhancing the catalyst activity when the resin is obtained or a method of washing the obtained resin with a solvent or propylene monomer per se.

From the same points of view, it is preferred that the mesopentad fraction of said polypropylene resin is 0.95 or more. More preferred is 0.97 or more. The mesopentad fraction is an indicator of stereoregularity of the crystal phase of polypropylene measured by the nucleic magnetic resonance method (NMR method), and it is preferred that the value of the mesopentad fraction is higher, since the higher value means higher crystallinity and enhances the melting point and the dielectric breakdown voltage at high temperature. The upper limit of the mesopentad fraction is not especially specified. Such a highly stereoregular resin can be obtained by a method of washing the obtained resin powder with a solvent such as n-heptane as described above or a method of appropriately selecting the catalyst and/or co-catalyst or selecting the chemical composition.

In view of film formability, it is more preferred that the linear polypropylene has a melt flow rate (MRF) of 1 to 10 g/10 min (230°C, 21.18N load). An especially preferred range is 2 to 5 g/10 min (230°C, 21.18N load). The melt flow rate (MFR) can be kept in the abovementioned range by employing, for example, a method of controlling the average molecular weight and the molecular weight distribution.

The linear polypropylene is mainly composed of a propylene homopolymer, but may also contain a comonomer such as another unsaturated hydrocarbon or may also be blended with a propylene copolymer to such an extent that the object of this invention is not impaired. Examples of such a comonomer or the monomer component of such a blend include ethylene, propylene (in case of copolymer blend), 1-butene, 1-pentene, 3-methylpentene-1,3-methylbutene-1,1-hexene, 4-methylpentene-1,5-ethylhexene-1,1-octene, 1-decene, 1-dodecene, vinylcyclohexene, styrene, allylbenzene, cyclopentene, norbornene, 5-methyl-2-norbornene, etc. With regard to the copolymerized amount or the blended amount, in view of dielectric breakdown properties and dimensional stability, it is preferred that the copolymerized amount is less than 1 mol%, or that the blended amount is less than 10 wt%.

Further, the linear polypropylene can contain publicly known additives such as a crystal nucleating agent, antioxidant, thermal stabilizer, slipping agent, antistatic agent, anti-blocking agent, filler, viscosity modifier and coloration preventive, to such an extent that the object of this invention is not impaired.

Among them, as the case may be, it may be preferred in view of long-term heat resistance to select the antioxidants used and their added amounts. That is, as the antioxidants, sterically hindered phenol-based compounds are preferred, and a high molecular weight phenol-based compound with a molecular weight of 500 or more is preferred as at least one of the antioxidants. Various compounds can be exemplified as the antioxidants, and for example, it is preferred to use 2,6-di-t-butyl-p-cresol (BHT; molecular weight 220.4) in combination with 1,3,5-trimethyl-2,4,6-tris(3,5-di-t-butyl-4-hydroxybenzyl)benz ene {for example, Irganox (registered trademark) 1330 produced by Ciba Geigy, molecular weight 775.2} or tetrakis[methylene-3(3,5-di-t-butyl-4-hydroxyphenyl)propionate ]methane (for example, Irganox 1010 produced by Ciba Geigy, molecular weight 1177.7), etc. It is preferred that the total content of these antioxidants is in a range from 0.03 to 1 wt% based on the total weight of polypropylene. If the content of the antioxidants is too small, the long-term heat resistance may become poor as the case may be. If the content of the antioxidants is too large, the antioxidants may bleed out to cause blocking at high temperature, for adversely affecting the capacitor element as the case may be. A more preferred content range is 0.1 to 0.9 wt%, and an especially preferred range is 0.2 to 0.8 wt%.

In this invention, a crystal nucleating agent can be added to such an extent that the object of this invention is not impaired. As described before, the branched-chain polypropylene resin per se acts as an $\alpha$ crystal nucleating agent. As other nucleating agents, exemplified are $\alpha$ crystal nucleating agents (dibenzylidene sorbitol, sodium benzoate, etc.) and P crystal nucleating agents (potassium 1,2-hydroxystearate, magnesium benzoate, amide-based compounds such as N,N'-dicyclohexyl-2,6-naphthalenedicarboxamide, quinacridone-based compounds, etc.), etc.

However, in this invention, if any of these crystal nucleating agents is added, it may be difficult to obtain the intended surface roughness, and electric properties such as volume resistivity at high temperature may be adversely affected. It is preferred that the added amount is less than 0.1 wt%, and it is more preferred that the crystal nucleating agent is not substantially added.

The biaxially oriented polypropylene film of this invention can be obtained by using the raw materials capable of providing the abovementioned properties and biaxially orienting. The biaxial orienting method can be any of simultaneous biaxial stretching method using an inflation method, simultaneous biaxial stretching method using a stenter, and subsequent biaxial stretching method using a stenter. Among them, in view of film formation stability, thickness uniformity and film surface geometry control, the film formed by a sequential biaxial stretching method using a stenter can be preferably used. It is preferred that the thickness of the biaxially oriented polypropylene film of this invention is 1.5 to 50 $\mu$. A more preferred range is 2.0 to 30 $\mu$m, and an especially preferred range is 2.5 to 20 $\mu$m. If the film thickness is too thin, the mechanical strength and the dielectric breakdown strength may become poor. It is not preferred that the film thickness is too thick for such reasons that it is difficult to form a uniformly thick film, and further that in the case where it is used as a dielectric of a capacitor, the capacity per volume becomes small.

Furthermore, it is preferred that the ash content of the biaxially oriented polypropylene film of this invention is 50 ppm or less. More preferred is 30 ppm or less, and especially preferred is 20 ppm or less. If the ash content is too much, the dielectric breakdown properties of the film decline, and in the case where it is used in a capacitor, the dielectric breakdown strength may decline as the case may be. To keep the ash content in this range, it is important to use raw materials containing only a small amount of a catalyst residue, and a method of decreasing the contamination from the extrusion system for film formation as far as possible, for example, a method of bleeding for more than 1 hour can be employed.

The biaxially oriented polypropylene film of this invention can be preferably used as a dielectric film of a capacitor, and is not limited in the types of capacitors. Particularly, in view of electrode constitution, it can be used for a foil-wound capacitor and a metallized film capacitor, and it can also be used for an oil-immersed capacitor impregnated with an insulating oil and a dry capacitor not using an insulating oil at all. Further, in view of form, it can be used for a wound capacitor and a laminated capacitor. However, in view of the properties of the film of this invention, it is especially preferred to use the film for a metallized film capacitor. The surface energy of a polypropylene film is low, and it is difficult to stably deposit a metal. Therefore, for better metal adhesion, it is preferred to treat the surface beforehand.

Examples of the surface treatment include corona discharge treatment, plasma treatment, glow treatment, flame treatment, etc. The surface wet tension of an ordinary polypropylene film is about 30 mN/m, and it is preferred to apply any of the surface treatments, since a wet tension of 37 to 50 mN/m, preferably about 39 to about 48 mN/m can be achieved to assure excellent adhesion to the metal layer and good preservability.

The method for producing the biaxially oriented polypropylene film of this invention is explained below, but the method is not limited to that explained below.

A blend obtained by blending a high melt-tension polypropylene resin with a linear polypropylene resin is melt-kneaded, passed through a filter, extruded from a slit die at a temperature of 220 to 280°C, and solidified on a cooling drum, to obtain a cast sheet. In this case, it is preferred to appropriately control the temperature of the cooling drum, for appropriately producing β crystals, to obtain the film of this invention. For efficiently producing β crystals, it is preferred to keep the sheet at the resin temperature of maximizing the P crystal production efficiency for a predetermined period of time. The temperature is said to be usually 115 to 135°C. It is preferred that the holding time is 1 second or more. To realize these conditions, the process can be adequately decided in response to the resin temperature, extruded amount, take-up speed, etc. In view of productivity, since the diameter of the cooling drum greatly affects the holding time, it is preferred that the diameter of the drum is at least 1 m or more. Further, the cooling drum temperature to be selected is arbitrary to some extent, since it is affected by other factors as described before, but it is preferred that the temperature is 70 to 120°C. A more preferred range is 80 to 110°C, and an especially preferred range is 85 to 100°C. If the casting drum temperature is too high, the crystallization of the film progresses too much, making the stretching in the subsequent step difficult, and voids may be formed in the film to lower the dielectric breakdown resistance as the case may be. The method of making the sheet adhere to the casting drum can be any method of electrostatic applied method, adhesion method using the surface tension of water, air knife method, press roll method, submerged casting method, etc. An air knife method is preferred, since it assures good flatness and allows the control of surface roughness.

Subsequently, the cast film is biaxially stretched to be biaxially oriented. At first, the cast film is passed through rolls kept at 120 to 150°C, to be preheated, and in succession, said sheet is passed through rolls kept at a temperature of 130 to 150°C with different circumferential speed, to be stretched to 2 to 6 times in the machine direction, and cooled to room temperature. In succession, the stretched film is introduced into a stenter, stretched to 5 to 15 times in the transverse direction at a temperature of 150 to 170°C, relaxed by 2 to 20% in the transverse direction, while being heat-set at a temperature of 140 to 170°C, and wound. Subsequently, the film is treated with corona discharge in air, nitrogen, carbon dioxide gas or a mixed gas consisting of the foregoing, on the surface to be metallized, for better adhesion to a deposited metal, and wound by a winder.

The obtained film is set in a vacuum metallizer, and coated with an oil using a gravure coater for forming insulation grooves suitable for each purpose. Then, a metal suitable for each purpose is deposited to achieve a predetermined film resistance. The metallized film is slit and formed as a pair of two metallized film reels for producing capacitor elements. Then, the metallized films are wound in the shape of an element, followed by flattening with a hot press, spraying a metal (metallikon process) to the ends, attaching leads, impregnating with an insulating oil as required, and externally packaging, to produce a capacitor.

The methods for measuring property values and the methods for evaluating effects in this invention are described below.

(1) Film thickness (μm)

The thickness was measured using a micrometer according to 7.4.1.1 of JIS C 2330 (2001).

(2) Glossiness

Glossiness values were measured at five points at an incidence angle of 60°C and a light receiving angle of 60°C using digital variable angle glossimeter UGV-5D produced by Suga Test Instruments Co., Ltd. according to JIS K 7105, and averaged to obtain the glossiness.

(3) Intrinsic viscosity ([η])

Zero point one milligram (0.1 mg) of a sample was dissolved into 100 ml of tetralin of 135°C, and the viscosity of the solution was measured in a thermostatic bath of 135°C using a viscometer. The specific viscosity S was used to obtain the intrinsic viscosity [η] from the following formula (in dl/g).

$$[\eta] = (S/0.1) \times (1 + 0.22 \times S)$$

(4) Melt flow rate (MFR)

The melt flow rate was measured according to the polypropylene test method (230°C, 21.18N) described in JIS K 6758.

(5) Melt tension (MS)

The melt tension was measured using an instrument for MFR measurement described in JIS K 7210. The melt tension tester produced by Toyo Seiki Seisaku-sho, Ltd. was used. The polypropylene was heated to 230°C, and the molten polypropylene was extruded at an extrusion speed of 15 mm/min, to make a strand. The strand was taken up at a speed of 6.5 m/min, when the tension was measured as the melt tension.

(6) Observation of surface geometry and crater size

The crater size was measured by forming an aluminum-deposited layer on the surface of a film and observing with a differential interference microscope (OPTIPHOT produced by NIKON).
Five visual fields (the observation area of each field was 0.73 mm x 0.95 mm) were observed on each surface, and respectively photographed, to visually confirm the surface geometry. A crater is a surface spot pattern having a "circular to elliptical" (hereinafter generally expressed as "elliptical") periphery. Typical forms are elliptical surface spot patterns shown in Fig. 3, and the rim portions of the elliptical forms are observed as relatively sharp and continuous protrusion-like (mountain chain-like) forms on the surface roughness chart. Usually most of the forms are perfectly closed elliptical forms, but some forms are observed as imperfectly closed elliptical forms, i.e., circular arcs. Even an imperfectly closed elliptical form with a circular arc length corresponding to 70% or more of the peripheral length of the ellipse formed by extrapolating the imperfectly closed ellipse was defined as a crater. The crater size was defined as the major axis of the ellipse defined as a crater like this. The sizes of the largest five craters observed in each visual field were averaged, and further the mean values of the five visual fields are averaged to obtain the crater size.

(7) Melting point and melt crystallization temperature (°C)

Differential scanning calorimeter RDC220 produced by Seiko was used to measure under the following conditions.

Preparation of sample

Five milligrams (5 mg) of a specimen was hermetically contained in an aluminum pan for testing. Meanwhile, if the film had a metal deposited or the like, the metal was adequately removed.

Measurement

The film was melted, recrystallized and re-melted in the following steps (a) $\rightarrow$ (b) $\rightarrow$(c). The highest melting peak temperature in the melting peak observed in the 2nd run was identified as the melting point of the resin. The values of three samples were averaged.

(a) 1st run 30°C $\rightarrow$ 280°C (heating rate 20°C/min)
(b) Tmc Held at 280°C for 5 minutes and cooled to 30°C at 20°C/min.
(c) 2nd run 30°C $\rightarrow$ 280°C (heating rate 20°C/min)

(8) Mesopentad fraction (mmmm)

A sample was dissolved in a solvent, to obtain the mesopentad fraction (mmmm) using 13C-NMR under the following conditions (Reference document: "New Edition, Polymer Analysis Handbook," Polymer Analysis & Characterization, The Japan Society for Analytical Chemistry, 1995, pages 609-611)

A. Measuring conditions

Instrument: DRX-500 produced by Bruker
Measuring nucleus: 13C nucleus (resonance frequency, 125.8 MHz)
Measuring concentration: 10 wt%
Solvent: Benzene/orthodichlorobenzene-d4 = 1:3 mixed solution
Measuring temperature: 130°C
Spin speed: 12 Hz

NMR test tube: 5 mm tube
Pulse width: 45° (4.5 $\mu$s)
Pulse repetition time: 10 seconds
Data point: 64 K
Conversion times: 10000 times
Measuring mode: Complete decoupling

B. Analysis conditions

Fourier transformation was performed with LB (line broadening factor) as 1.0, to identify the mmmm peak as 21.86 ppm. WINFIT software (produced by Bruker) was used to split the peak. In this case, the peak on the high magnetic field side was split as follows, and further the software was automatically fitted, to optimize the peak split. The total of peak fractions of mmmm and ss (spinning side band peak of mmmm) was employed as the mesopentad fraction (mmmm).
Meanwhile, five samples were used, and the mean value was obtained.

Peak

(a) mrrm
(b) (c) rrrm (split as two peaks)
(d) rrrr
(e) mrmm + rmrr
(f) mmrr
(g) mmmr
(h) ss (spinning side band peak of mmmm)
(i) mmmm
(j) rmmr

(9) Ratio of weight average molecular weight to number average molecular weight (Mw/Mn)

Gel permeation chromatography (GPC) was used to obtain the molecular weights in reference to monodisperse polystyrene.
The number average molecular weight (Mn) and the weight average molecular weight (Mw) are defined by the follow formulae from the number of molecules (Ni) of the molecular weight (Mi) at each elution position of the GPC curve obtained via the molecular weight calibration curve.

Number average molecular weight: $Mn = \Sigma(Ni \cdot Mi)/\Sigma Ni$
Weight average molecular weight: $Mw = \Sigma(Ni \cdot Mi^2)/\Sigma(Ni \cdot Mi)$
Molecular weight distribution: Mw/Mn
Meanwhile, the measuring conditions were as follows (the parenthesized names are of the makers).
Instrument: Gel permeation chromatograph GPC-150C (Waters)
Detector: Differential refractive index detector RI, sensitivity 32x, 20% (Waters)
Column: Shodex HT0806M (2) (Showa Denko)
Solvent: 1,2,4,-trichlorobenzene (0.1 w/v% of BHT added) (Ardrich)
Flow velocity: 1.0 ml/min
Temperature: 135°C
Sample: Dissolution condition ... 165$\pm$5°C x 10 min (stir) Concentration ... 0.20 w/v%

Filtration ... Membrane filter pore size 0.45 $\mu$m (Showa Denko) Injection amount: 200 $\mu$l
Molecular weight calibration: The relationship between the molecular weight and the retention time obtained by measuring monodisperse polystyrene (Tosoh Corp.) under the same conditions as those of a specimen was used to determine the molecular weight of polypropylene. The value is a relative value in reference to polystyrene.
Data processing: GPC Data Processing System produced by Toray Research Center, Inc. was used.

(10) Cold xylene soluble portion (CXS)

Zero point five gram (0.5 g) of a polypropylene film sample was dissolved into 100 ml of boiled xylene, and the solution was allowed to cool and was recrystallized in a thermostatic bath of 20°C for 1 hour. Subsequently the polypropylene-based component dissolved in the filtrate was determined by liquid chromatography (X (g)}. The accurately weighed value {X0 (g)} of 0.5g of the sample was used to obtain the CXS content from the following formula.

$$CXS \text{ (wt\%)} = X/X0 \times 100$$

(11) Center line mean roughness (Ra) and 10-point mean roughness (Rz)

These roughness values were measured using "Non-Contact Three-Dimensional Microfigure Measuring Instrument (ET-30HK) and "Three-Dimensional Roughness Analyzer" (Model SPA-11) respectively produced by Kosaka Laboratory Ltd. Three measured values were averaged. Detailed conditions were as follows. Treatment of test surface: The test surface had aluminum deposited in vacuum, and measured by non-contact method.

Measuring length: 1 mm
Transverse magnification: 200x
Longitudinal magnification: 20000x
Cutoff: 0.25 mm
Feed rate in transverse direction: 0.1 mm/sec
Feed pitch in longitudinal direction: 10 $\mu$m
Feed frequency in longitudinal direction: 20 times
Measuring direction: Transverse direction of film

(12) Dielectric breakdown voltage (v/$\mu$m)

The mean value (Xav) and the minimum value (Xmin) were obtained according to the B method (plate electrode method) of 7.4.11.2 of JIS C 2330 (2001 edition), and they were divided by the thickness ($\mu$m) of the measured sample film, being expressed in v/$\mu$m.
Meanwhile, even if Xav is large and good, small Xmin means that the variation is large, and a problem may occur. So, it is desirable that Xmin corresponds to 60% or more of Xav. (13) Evaluation of properties of metallized capacitor
Each of the films obtained in the respective examples and comparative examples described later is pattern-metallized with aluminum with using a vacuum metallizer produced by ULVAC to form a so-called T margin pattern with a margin formed in the direction perpendicular to the longitudinal direction, and to achieve a film resistance of 5 $\Omega$/sq. Thus, a metallized film reel with a width of 50 mm was obtained.
Then, an element winder produced by Kaido Manufacturing Co., Ltd. was used to obtain an element wound from the reel, and a metal was sprayed to it (metallikon). Then, in vacuum, it was heat-treated at a temperature of 120°C for 16 hours, and leads were attached. The element was potted in an epoxy resin, to be finished as a capacitor element. The capacitance of the capacitor element was 10 $\mu$F.
Five capacitor elements obtained as described above were used. A voltage of 500 V DC was applied to the capacitor elements at room temperature, and after lapse of 10 minutes with the voltage kept at 500 V DC, the applied voltage was repetitively raised by 50 V DC each in steps. The capacitance values measured in the respective steps were plotted on the graph, and the voltage at which the capacitance became 80% of the initial value was divided by the thickness of the film, to identify the breakdown voltage. Further, the voltage was raised till the capacitance became 5% or less of the initial value, and the capacitor elements were dismantled, to examine the breakdown states. The preservability was evaluated according to the following criterion.

| State | Rank |
|---|---|
| The element shape did not change and no through breakdown was observed. | 4 |
| The element shape did not change, but through breakdown was observed in 10 layers or less. | 3 |
| The element shape changed, or through breakdown was observed in more than 10 layers. | 2 |
| The element was broken. | 1 |

Rank 4 allows use without any problem, and rank 3 allows use depending on conditions. Ranks 2 and 1 cause a practical problem.

[Examples]

The effects of this invention are explained below further in reference to examples.

Table 1 shows the properties of the resins used in the examples.

[Table 1]

| Name | Tm °C | Tmc °C | mmmm | CXS % | Mw/Mn | Remark |
|------|-------|--------|------|-------|-------|--------|
| PP-A | 167 | 110 | 0.985 | 0.9 | 6.5 | Produced by Prime Polymer |
| PP-B | 166 | 110 | 0.98 | 1.1 | 7.8 | Produced by Borealis |
| PP-C | 163 | 109 | 0.934 | 3.2 | 6.6 | Produced by Prime Polymer |

Tm: Melting point
Tmc: Melt crystallization temperature
mmmm: Mesopentad fraction
CXS: Cold xylene soluble portion
Mw/Mn: Ratio of weight average molecular weight to number average molecular weight

Examples 1 to 5

A high melt-tension PP (Profax PF-814; hereinafter called HMS) produced by Basell was added to a polypropylene resin (linear PP: PP-A resin) produced by Prime Polymer Co., Ltd. of Table 1, with the added amount of HMS kept at 0.1 wt% (Example 1), 0.3 wt% (Example 2), 0.5 wt% (Example 3), 1.0 wt% (Example 4) or 1.5 wt% (Example 5) based on the weight of the entire resin.

Each resin was melt-kneaded by an extruder and extruded as a sheet from a T slit die at a resin temperature of 265°C. The melted sheet was cooled and solidified on a cooling drum with a diameter of 1 m kept at 90°C. The holding time at 115 to 135°C was 1.3 seconds as a result of measurement using a radiation thermometer.

Then, the sheet was preheated to 135°C, and in succession, made to run through rolls kept at a temperature of 145°C with different circumferential speed, to be stretched to 5 times in the machine direction. Then, the film was introduced into a tenter, to be stretched to 9 times in the transverse direction at a temperature of 158°C, and was relaxed by 5% in the transverse direction while being heat-treated at 162°C, to obtain a biaxially oriented single-layer polypropylene film with a thickness of 2.9 $\mu$m. Further, the surface of said single-layer film was treated with corona discharge at a treatment intensity of 25 W·min/m$^2$ in air. The properties of the biaxially oriented films obtained as described above are shown in Table 2. Furthermore, Figs. 1 and 2 are a surface photograph taken by a differential interference microscope and a surface roughness chart, respectively showing the surface on the cooling drum side of Example 3. Crepe-like asperity and crater-like asperity can be observed. The crepe-like asperity can be observed on the roughness chart as the undulation of the basic surface configuration other than the large protrusions.

All the examples are excellent in breakdown voltage and capacitor properties. However, when the added amount of HMS was 1.5 wt% or more, the breakdown voltage tended to rather decline.

Example 6

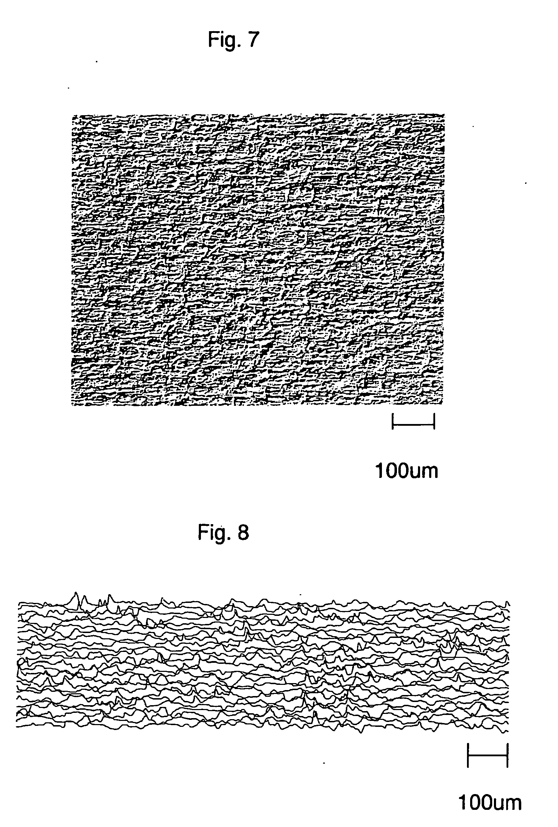

The same resin composition as that of Example 3 was used to obtain a film, except that the film forming conditions were such that the preheating temperature and the stretching temperature for longitudinal stretching were respectively raised by 4°C, for preheating at 139°C and subsequently stretching at 149°C. The differential interference microscope photograph showing the surface of the film obtained like this on the cooling drum side is shown in Fig. 7, and the roughness chart is shown in Fig. 8. Since the longitudinal stretching temperature was raised, the roughness of the basic surface configuration was intensified, and as shown in Table 2, it was confirmed that Ra became rather larger, while Rz/Ra became rather smaller, to uniformize the roughness.

The breakdown voltage of this film was rather lower than that of Example 3. When this film was used to prepare capacitor elements, there was a slight tendency of telescoping, but when the conditions were optimized, good element windability could be obtained. Further, as shown in Table 2, the dielectric breakdown voltage properties and capacitor properties were good.

Comparative Example 1

A film was obtained as described in Example 1, except that the resin PP-A only was used without adding HMS.

The differential interference microscope photograph showing the surface of the film obtained like this on the cooling drum side is shown in Fig. 3, and the three-dimensional surface roughness chart is shown in Fig. 4. As can be seen from Fig. 3, a surface configuration consisting of large crater-like projections and a flat surface can be observed, and it can also be confirmed from the roughness chart of Fig. 4. Further, as shown in Table 2, this film was poor in dielectric breakdown voltage properties and capacitor properties.

Comparative Examples 2 and 3

Films were formed as described in Examples 1 and 2, except that the cooling drum temperature was 50°C. When a radiation thermometer was used for measuring the temperature, the films could be held at 115 to 135°C only for 0.5 second or less. The crepe-like asperity could be observed on the films obtained like this, but crater-like asperity could not be observed. The sheets had very high breakdown voltage properties but poor preservability, showing a problem in practical capacitor properties.

Comparative Example 4

A film was produced and evaluated as described in Example 1, except that the added amount of HMS was 3 wt%.
The surface geometry of the biaxially stretched film obtained like this on the cooling drum side is shown in Figs. 5 and 6. Uniform crepe-like asperity perfectly free from crater-like asperity was obtained, and when the film was wound in the winding step of a film forming machine, it telescope in the transverse direction. Also when the film was slit to a small width, the same problem occurred. The breakdown voltage of the sheet was low.

Examples 6 and 7

Films were obtained as described in Examples 2 using PP-B and PP-C as polypropylene resins and were found to be excellent in electric properties.
Table of examples and comparative examples

[Table 2a]

| | Resin composition (wt%) | Temperature of cooling drum (°C) | Gloss (%) | | Crater diameter (μm) | | Ra (μm) | | Rz (μm) | | Rz/Ra | |
|---|---|---|---|---|---|---|---|---|---|---|---|---|
| | | | Surface A | Surface B | Surface A | Surface B | Surface A | Surface B | Surface A | Surface B | Surface A | Surface B |
| Example 1 | PP-A(99.9) +HMS(0.1) | 90 | 125 | 127 | 99 | 140 | 0.04 | 0.04 | 1.10 | 1.15 | 27.5 | 28.8 |
| Example 2 | PP-A(99.7) +HMS(0.3) | 90 | 123 | 125 | 93 | 135 | 0.04 | 0.05 | 1.08 | 1.12 | 27.0 | 22.4 |
| Example 3 | PP-A(99.5) +HMS(0.5) | 90 | 121 | 123 | 80 | 120 | 0.04 | 0.05 | 1.00 | 1.08 | 25.0 | 21.6 |
| Example 4 | PP-A(99.0) +HMS(1.0) | 90 | 120 | 121 | 75 | 104 | 0.05 | 0.06 | 0.98 | 1.05 | 19.6 | 17.5 |
| Example 5 | PP-A(98.5) +HMS(1.5) | 90 | 115 | 115 | 75 | 96 | 0.05 | 0.05 | 0.96 | 1.00 | 19.2 | 20.0 |
| Example 6 | PP-A(99.5) +HMS(0.5) | 90 | 100 | 100 | 80 | 120 | 0.06 | 0.06 | 1.00 | 1.08 | 16.7 | 18.0 |
| Comparative Example 1 | PP-A(100) | 90 | 135 | 137 | 160 | 256 | 0.03 | 0.04 | 1.20 | 1.25 | 40.0 | 31.3 |
| Comparative Example 2 | PP-A(99.0) +HMS(1.0) | 50 | 129 | 131 | ND | ND | 0.03 | 0.03 | 0.46 | 0.40 | 15.3 | 13.3 |
| Comparative Example 3 | PP-A(98.5) +HMS(1.5) | 50 | 125 | 125 | ND | ND | 0.04 | 0.04 | 0.30 | 0.25 | 7.5 | 6.3 |
| Comparative Example 4 | PP-A(97.0) +HMS(3.0) | 90 | 85 | 86 | ND | ND | 0.06 | 0.07 | 0.60 | 0.65 | 10.0 | 9.3 |
| Example 7 | PP-A(99.7) +HMS(0.3) | 85 | 122 | 123 | 95 | 123 | 0.04 | 0.04 | 1.10 | 1.15 | 27.5 | 28.8 |
| Example 8 | PP-A(99.7) +HMS(0.3) | 85 | 123 | 124 | 90 | 115 | 0.04 | 0.04 | 1.08 | 1.20 | 27.0 | 30.0 |
| Surface A: Cooling drum side Surface B: Non-cooling drum side | | | | | | | | | | | | |

[Table 2b]

| | Resin composition (wt%) | Film thickness (μm) | Dielectric breakdown voltage (V/μm) | | | Capacitor properties | |
|---|---|---|---|---|---|---|---|
| | | | Xav | Xmin | Xmin/av (%) | Breakdown voltage (V/μm) | Preservability |
| Example 1 | PP-A(99.9)+HMS(0.1) | 2.9 | 600 | 490 | 82 | 380 | Rank 4 |
| Example 2 | PP-A(99.7)+HMS(0.3) | 2.9 | 635 | 524 | 83 | 396 | Rank 4 |
| Example 3 | PP-A(99.5)+HMS(0.5) | 2.9 | 640 | 550 | 86 | 413 | Rank 4 |
| Example 4 | PP-A(99.0)+HMS(1.0) | 2.9 | 620 | 550 | 89 | 397 | Rank 4 |
| Example 5 | PP-A(98.5)+HMS(1.5) | 2.9 | 590 | 520 | 88 | 344 | Rank 4 |
| Example 6 | PP-A (99.5)+ HMS (0.5) | 2.9 | 625 | 540 | 86 | 380 | Rank 4 |
| Comparative Example 1 | PP-A(100) | 2.9 | 520 | 400 | 77 | 310 | Rank 2 |
| Comparative Example 2 | PP-A(99.0)+HMS(1.0) | 2.9 | 640 | 550 | 86 | 410 | Rank 2 |
| Comparative Example 3 | PP-A(98.5)+HMS(1.5) | 2.9 | 630 | 570 | 90 | 405 | Rank 2 |
| Comparative Example 4 | PP-A(97.0)+HMS(3.0) | 2.9 | 560 | 505 | 90 | 310 | Rank 4 |
| Example 7 | PP-A(99.7)+HMS(0.3) | 3.5 | 630 | 554 | 88 | 390 | Rank 4 |
| Example 8 | PP-A(99.7)+HMS(0.3) | 3.5 | 620 | 550 | 89 | 385 | Rank 4 |

[Industrial applicability]

The biaxially oriented polypropylene film of this invention can be suitably used for packaging, industrial applications, etc. Further, the biaxially oriented polypropylene film of this invention is especially suitable for a capacitor dielectric, since it is excellent in processability and breakdown voltage at high temperature.

In the following clauses, preferred embodiments of the invention are described:

1. A biaxially oriented polypropylene film formed of a polypropylene resin mainly composed of propylene, at least one of the surfaces of which has a basic surface configuration consisting of crepe-like asperity, and having a 10-point mean roughness (Rz) of 0.5 to 1.5 μm and a surface glossiness of 90 to 135%.

2. A biaxially oriented polypropylene film, according to clause 1, wherein said film surface contains crater-like asperity and the major axes of the craters are 150 μm or less.

3. A biaxially oriented polypropylene film, according to clause 1 or 2, wherein the ratio (Rz/Ra) of the 10-point mean roughness (Rz) to the center line mean roughness (Ra) of at least one film surface is 8 or more.

4. A biaxially oriented polypropylene film, according to any one of clauses 1 through 3, wherein said polypropylene resin is obtained by mixing a branched-chain polypropylene (H), the melt tension (MS) and the melt flow rate (MFR) of which measured at 230°C satisfy the relational expression of log (MS) > -0.56 log (MFR) + 0.74, with a linear polypropylene.

5. A biaxially oriented polypropylene film, according to any one of clauses 1 through 4, wherein said polypropylene resin contains 0.05 to 3 wt% of said branched-chain polypropylene (H).

6. A biaxially oriented polypropylene film, according to clause 5, wherein the content of said branched-chain polypropylene (H) is 0.1 to 0.9 wt%.

7. A biaxially oriented polypropylene film, according to any one of clauses 1 through 6, wherein the thickness of said biaxially oriented polypropylene film is 1 to 5 $\mu$m.

**Claims**

1. A biaxially oriented polypropylene film formed of a polypropylene resin mainly composed of propylene, both surfaces of which have a basic surface configuration consisting of a 10-point mean roughness (Rz) of 0.5 to 1.5 $\mu$m and the ratio (Rz/Ra) of the 10-point mean roughness (Rz) to the center line mean roughness (Ra) of 8 to 35 a surface glossiness of 90 to 135%.

2. A biaxially oriented polypropylene film, according to claim 1, wherein said film surface contains crater-like asperity and the major axes of the craters are 150 $\mu$m or less.

3. A biaxially oriented polypropylene film, according to any one of claims 1 through 2, wherein said polypropylene resin is obtained by mixing a branched-chain polypropylene (H), the melt tension (MS) and the melt flow rate (MFR) of which measured at 230°C satisfy the relational expression of log (MS) > -0.56 log (MFR) + 0.74, with a linear polypropylene.

4. A biaxially oriented polypropylene film, according to any one of claims 1 through 3, wherein said polypropylene resin contains 0.05 to 3 wt% of said branched-chain polypropylene (H).

5. A biaxially oriented polypropylene film, according to claim 4, wherein the content of said branched-chain polypropylene (H) is 0.1 to 0.9 wt%.

6. A biaxially oriented polypropylene film, according to any one of claims 1 through 5, wherein the thickness of said biaxially oriented polypropylene film is 1 to 5 $\mu$m.

Fig. 1

100um

Fig. 2

100um

Fig. 3

100um

Fig. 4

100um

Fig. 5

100um

Fig. 6

100um

Fig. 7

100um

Fig. 8

100um

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 51063500 A
- JP 2001324607 A
- JP 2001129944 A
- JP 2001072778 A
- JP 62121704 A
- JP 2869606 B

### Non-patent literature cited in the description

- **M. FUJIYAMA.** *Journal of Applied Polymer Science,* 1988, vol. 36, 985-1948
- New Edition, Polymer Analysis Handbook. Polymer Analysis & Characterization. The Japan Society for Analytical Chemistry, 1995, 609-611
- 7.4.11.2 of JIS C 2330. 2001